# EUROPÄISCHE PATENTANMELDUNG

(11) **EP 4 733 351 A1**
(43) Veröffentlichungstag der Anmeldung: **29.04.2026**
(21) Anmeldenummer: 25209451.1
(22) Anmeldetag: 17.10.2025
(51) Int. Cl.: C08K 3/04, C08K 5/5313, C08L 77/02

(54) **FLAMMGESCHÜTZTE POLYAMID-FORMMASSEN**

(30) Priorität: 22.10.2024 CH 11532024
(71) Anmelder: EMS-CHEMIE AG, 7013 Domat/Ems (CH)
(72) Erfinder: Aepli, Etienne, 7013 Domat/Ems (CH)
(74) Vertreter: Pfenning, Meinig & Partner mbB

(57) **Zusammenfassung**

Flammgeschützte Polyamid-Formmasse insbesondere für Bahnanwendungen enthaltend, bevorzugt bestehend aus:

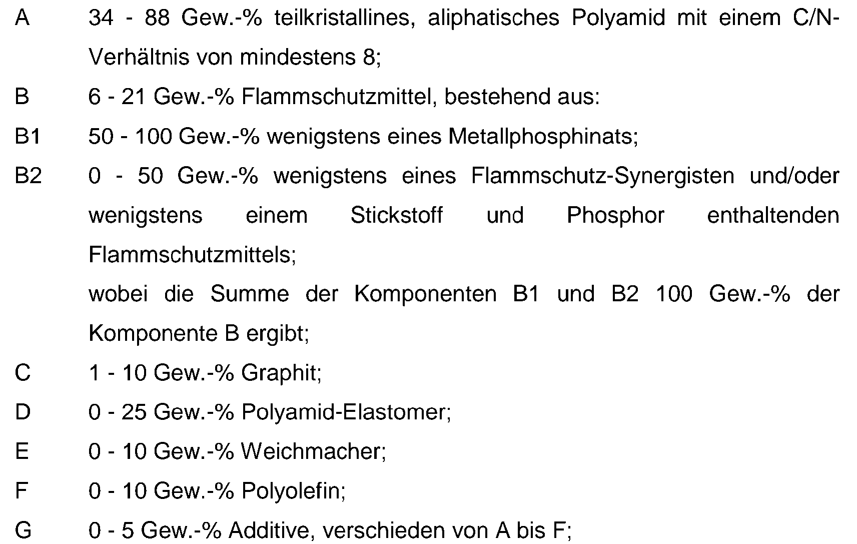

wobei die Summe der Gewichtsanteile der Komponenten D bis F 5 bis 30 Gew.-%, bezogen auf die Summe der Gewichtsprozente der Komponenten A bis G, beträgt und wobei sich die Gewichtsanteile der Komponenten A bis G auf 100 Gew.-% ergänzen.

## Beschreibung

### TECHNISCHES GEBIET

Die vorliegende Erfindung betrifft halogenfrei flammgeschützte Polyamid-Formmassen auf Basis langkettiger, aliphatischer Polyamide, die hohe LOl-Werte aufweisen und gut durch Extrusionsverfahren verarbeitbar sind. Zudem betrifft die Erfindung Herstellungsverfahren für solche Polyamid-Formmassen und Verwendungen davon.

### STAND DER TECHNIK

Flammgeschützte Polyamid-Formmassen sind aus dem Stand der Technik an sich bekannt.

Aus der EP-A-3 127 937 ist eine Polyamid-Formmasse mit einer Matrix aus Polyamid 12 bekannt, die zusätzlich Flammschutzmittel und Weichmacher enthält. Die Formmasse kann weiter Additive und Polyolefin enthalten. Zusätzlich zum Polyamid 12 kann ein Polyamid-Elastomer auf Basis von Polyamid 12 in der Matrix enthalten sein. Vorgeschlagen wird die Formmasse für flexible Bauteile, insbesondere für brandgeschützte Anwendungen im Bahnbereich. Die gearbeiteten Beispiele enthalten kein Graphit und es wird auch nicht offenbart, dass durch Verwendung von Graphit in einer solchen Formmasse der LOI bei niedrigem Gehalt an Flammschutzmittel erhöht werden kann.

EP-A-3502186 beschreibt eine weichgemachte, flammgeschützte thermoplastische Polyamid-Formmasse mit besonders guten Verarbeitungseigenschaften, gutem Flammschutz und guter Flexibilität sowie Auswaschbeständigkeit z.B. gegenüber Treibstoffen, sowie Verwendungen solcher Polyamid-Formmassen. Das Material ist z.B. geeignet als Material für Leitungen für Kraftstoffe im Automobilbereich oder generell flexible Formkörper einschliesslich Leitungen o. ä. für den Bahnbereich. Die Polyamide beruhen auf langkettigen aliphatischen Dicarbonsäuren. Auch hier fehlt der Hinweis auf Graphit.

Aus der EP-A-2 410 020 sind unverstärkte, halogenfrei flammgeschützte Polyamid-Formmassen und deren Verwendungen zur Herstellung von elektrischen und/oder elektronischen Bauteilen bekannt, wobei insbesondere auf die Eignung für Lötprozesse Wert gelegt wird. Als Polyamid-Basis werden dabei ausschliesslich teilaromatische Polyamide gearbeitet auf Basis von Terephthalsäure.

### DARSTELLUNG DER ERFINDUNG

Es ist damit unter anderem Aufgabe der vorliegenden Erfindung, eine neue, vorzugsweise unverstärkte Polyamid-Formmasse mit ausreichender Flexibilität zur Verfügung zu stellen, die halogenfrei flammgeschützt ist, einen hohen LOI-Wert (limiting oxygen index) und eine ausreichende Kerbschlagzähigkeit bei tiefen Temperaturen aufweist und insbesondere durch Extrusions- oder Extrusionsblasverfahren gut verarbeitbar ist. Die erfindungsgemässe Formmasse soll LOI-Werte bestimmt anhand DIN EN ISO 4589-2:2017 von über 32%, vorzugsweise von mindestens 34%, insbesondere bevorzugt von mindestens 36% aufweisen.

Diese Aufgabe wird gelöst durch die in den Ansprüchen definierte Formmasse, das in den Ansprüchen definierte Herstellungsverfahren für die Formmasse, und die Bauteile aus einer solchen Formmasse sowie die Verwendungen der Formmasse wie in den Ansprüchen angegeben.

Die Erfindung schlägt damit eine halogenfrei flammgeschützte Polyamid-Formmasse auf Basis von teilkristallinen, aliphatischen Polyamiden vor, die u.a. auch für Bahnanwendungen geeignet ist.

Überraschend wurde festgestellt, dass halogenfreie Flammschutzmittel auf Basis von Metallphosphinaten in Kombination mit Graphit für flexible Polyamid-Formmassen, enthaltend mindestens eine der Komponenten Weichmacher, Schlagzähmodifier, Polyamid-Elastomer mit Vorteil eingesetzt werden können. Die vorgeschlagenen Formmassen zeichnen sich insbesondere durch einen LOI, bestimmt gemäss DIN EN ISO 4589-2:2017, von grösser 32%, bevorzugt von mindestens 34%, besonders bevorzugt von mindestens 36%, einen Zug-E-Modul, bestimmt nach ISO 527:2012, im Bereich von 500 bis 1500 MPa, eine Bruchdehnung, bestimmt nach ISO 527:2012, grösser als 100% und eine Kerbschlagzähigkeit, bestimmt gemäss ISO 179/1 (2023) bzw. ISO 179/2 (2020), bei -45 °C von bevorzugt mindestens 4 kJ/m² aus.

Konkret betrifft die vorliegende Erfindung eine Polyamid-Formmasse enthaltend, bevorzugt bestehend aus:

| | |
|---|---|
| A | 34 - 88 Gew.-% teilkristallines, aliphatisches Polyamid mit einem C/N-Verhältnis von mindestens 8; |
| B | 6 - 21 Gew.-% Flammschutzmittel, bestehend aus: |
| B1 | 50 - 100 Gew.-% wenigstens eines Metallphosphinats; |
| B2 | 0 - 50 Gew.-% wenigstens eines Flammschutz-Synergisten und/oder wenigstens einem Stickstoff und Phosphor enthaltenden Flammschutzmittels; |
| | wobei die Summe der Komponenten B1 und B2 100 Gew.-% der Komponente B ergibt; |
| C | 1 - 10 Gew.-% Graphit; |
| D | 0 - 25 Gew.-% Polyamid-Elastomer; |
| E | 0 - 10 Gew.-% Weichmacher; |
| F | 0 - 10 Gew.-% Polyolefin; |
| G | 0 - 5 Gew.-% Additive, verschieden von A bis F; |

wobei die Summe der Gewichtsanteile der Komponenten D bis F 5 bis 30 Gew.-%, bezogen auf die Summe der Gewichtsprozente der Komponenten A bis G, beträgt und wobei sich die Gewichtsanteile der Komponenten A bis G auf 100 Gew.-% ergänzen.

Vorzugsweise ist die erfindungsgemässe Polyamid-Formmasse frei von Verstärkungsfasern, enthält somit insbesondere bevorzugt keine Glas- oder Kohlenstofffasern.

Weiterhin ist es bevorzugt, wenn es innerhalb der Polyamid-Formmasse keine Anteile an aromatischem und/oder teilaromatischen Polyamiden gibt.

Im Sinne der vorliegenden Erfindung wird unter dem Begriff "Polyamid" (Abkürzung PA) ein Oberbegriff verstanden, welcher Homopolyamide und Copolyamide unabhängig von ihrer Molmasse bzw. ihrer Viskosität umfasst. Die gewählten Schreibweisen und Abkürzungen für Polyamide und deren Monomere entsprechen den in der ISO-Norm 16396-1 (2015(D)) festgelegten.

Im Hinblick auf das erfindungsgemässe Polyamid (A) bilden die Monomere der Dicarbonsäure- und der Diaminkomponente bzw. der eingesetzten Aminocarbonsäuren oder Lactame sowie die gegebenenfalls eingesetzten monofunktionellen Regler durch die Kondensation Wiederholungseinheiten bzw. Endgruppen in Form von Amiden aus, die von den jeweiligen Monomeren abgeleitet sind. Diese machen in der Regel mindestens 95 Mol-%, insbesondere mindestens 99 Mol-% aller im Polyamid (A) vorliegenden Wiederholungseinheiten und Endgruppen aus. Daneben kann das Polyamid (A) auch geringe Mengen anderer Wiederholungseinheiten aufweisen, die aus Abbau- oder Nebenreaktionen der Monomere, beispielsweise der Diamine, resultieren können.

Was die Mengenangaben angeht, ist hervorzuheben, dass die Unterkomponenten (B1) und (B2) sich in den Mengenangaben nicht auf die gesamte Polyamid-Formmasse oder die Summe der Gewichtsprozente der Komponenten (A) bis (G) beziehen, sondern die dort angegebenen Mengenangaben beziehen sich jeweils auf 100% der Komponente (B), d.h. die Summe der Mengenangaben für die Komponenten (B1) und (B2) ergibt 100 % (B).

Soweit in der Folge Mengengaben für die Komponenten (A) - (G) angegeben werden, so sind die angegebenen Bereiche jeweils auf die Summe der Gewichtsprozente der Komponenten (A) bis (G) bezogen zu verstehen. Weiterhin gilt, die Summe der Gewichtsanteile der Komponenten (A) bis (G) nicht mehr als 100 Gewichtsprozent ausmacht, dass die Summe der Gewichtsanteile der Unterkomponenten (B1) und (B2) nicht mehr als 100 Gewichtsprozent der Komponente (B) ausmacht.

Die Begriffe "enthaltend" und "umfassend" in den vorliegenden Ansprüchen und in der Beschreibung bedeuten, dass weitere Komponenten nicht ausgeschlossen sind. Im Rahmen der vorliegenden Erfindung ist der Begriff "bestehend aus" als bevorzugte Ausführungsform der Begriffe "enthaltend" oder "umfassend" zu verstehen. Wenn definiert wird, dass eine Gruppe mindestens eine bestimmte Anzahl von Komponenten "enthält" oder diese "umfasst", ist dies auch so zu verstehen, dass eine Gruppe offenbart wird, die vorzugsweise aus diesen Komponenten "besteht". Der Begriff "bestehend aus" bedeutet, dass weitere Komponenten ausgeschlossen sind und somit keine weiteren Komponenten über die konkret genannten Komponenten hinaus in der Formmasse enthalten sind.

Die vorliegende Erfindung zeichnet sich u.a. dadurch aus, dass neben den Komponenten (A), (B) und (C) noch mindestens eine der Komponenten (D), (E) und (F) in der Formmasse vorhanden sein muss, wobei die Summe der Komponenten (D), (E) und (F) 5 bis 30 Gew.-%, bevorzugt 7 bis 26 Gew.-% und besonders bevorzugt 8 bis 24 Gew.-% oder 10 bis 24 Gew.-%, jeweils bezogen auf die Summe der Gewichtsprozente der Komponenten (A) bis (G), beträgt. Dabei bedeutet mindestens eine der Komponenten (D), (E) und (F), dass eine der Komponenten, also (D) oder (E) oder (F), oder eine Kombination aus zwei dieser Komponenten oder eine Kombination der drei Komponenten (D), (E) und (F) in der Formmasse vorliegt.

**Komponente (A):** Bei den Polyamiden der Komponente (A) handelt es sich um teilkristalline, aliphatische Polyamide, vorzugsweise um langkettige aliphatische Polyamide, deren C/N-Verhältnis mindestens 8, besonders bevorzugt mindestens 10, insbesondere bevorzugt 10 bis 13, ist.

Dabei ergibt sich das C/N-Verhältnis der jeweiligen Polyamide aus der Summe der Kohlenstoffatome (C) der die Polyamid-Einheiten aufbauenden Monomere, also den Dicarbonsäuren, Diaminen sowie Lactamen und Aminocarbonsäuren, in Bezug auf die Summe der Stickstoffatome (N) in diesen Monomeren, die im Polyamid zu Amidbindungen reagieren können. Enthält ein Polyamid mehrere Polyamid-Einheiten (kurz PA-Einheiten), wie beispielsweise PA 11/913 (30:70 mol-%), das die PA-Einheiten "11" und "913" umfasst, so werden die C/N-Verhältnisse der einzelnen PA-Einheiten gemäss ihrem Molanteil im Polyamid gewichtet. Für das Beispiel PA 11/913 (30:70 mol-%) resultiert somit ein C/N-Verhältnis von (0.3 * 11) + 0.7 * (9 + 13) / 2 = 11.

Im Sinne der vorliegenden Erfindung sind teilkristalline Polyamide solche Polyamide, die einen Schmelzpunkt besitzen und die in der dynamischen Differenz-Kalorimetrie (engl. Differential Scanning Calorimetry, DSC) nach ISO 11357-3 (2013) bei einer Aufheizrate von 20 K/min bevorzugt eine Schmelzwärme von wenigstens 20 J/g, besonders bevorzugt von 20 bis 80 J/g, aufweisen.

Im Rahmen der vorliegenden Erfindung bedeutet der Begriff "aliphatisches Polyamid", dass die Wiederholungseinheiten und die Monomere, aus denen sich die Polyamide ableiten, ausschliesslich auf acyclischen (offenkettigen) und cyclischen gesättigten oder ungesättigten Kohlenstoffverbindungen beruhen, die keine aromatischen Struktureinheiten aufweisen.

Bevorzugt sind die Polyamide (A) ausgewählt aus der Gruppe bestehend aus PA610, PA612, PA614, PA616, PA1010, PA1012, PA1014, PA1016, PA11, PA12 oder Mischungen davon. Unter den Polyamiden A werden solche bevorzugt, deren C/N-Verhältnis mindestens 10 ist. Somit sind besonders bevorzugt die Polyamide PA1010, PA1012, PA11, PA12 oder deren Mischungen, ganz besonders bevorzugt sind die Polyamide PA11 und PA12.

Komponente (A) hat vorzugsweise eine Lösungsviskosität bestimmt nach DIN EN ISO 307 (2007) im Bereich von ηᵣₑₗ = 1.5 - 2.8, vorzugsweise im Bereich von ηᵣₑₗ = 1.6 - 2.3, jeweils gemessen bei 20 °C an einer Lösung von 0.5 g Polymer gelöst in 100 ml m-Kresol. Besonders bevorzugt werden als Komponente (A) die Polyamid-Typen PA1010, PA1012, PA11 und/oder PA12 mit einer Lösungsviskosität im Bereich von ηᵣₑₗ = 1.5 - 2.8, vorzugsweise im Bereich von ηᵣₑₗ = 1.6 - 2.3.

Insbesondere bevorzugt werden als Komponente (A) die Polyamid-Typen PA1010, PA1012, PA11 und/oder PA12 mit einer mittleren Lösungsviskosität im Bereich von ηᵣₑₗ = 1.8-2.1, oder vorzugsweise im Bereich von ηᵣₑₗ = 1.9 bis 2.0, da diese Typen hinsichtlich Verarbeitbarkeit, insbesondere durch Extrusionsverfahren, Vorteile aufweisen. Vorteilhaft werden auch Mischungen dieser Polyamid-Typen mit unterschiedlicher Lösungsviskosität eingesetzt, wobei dann aber alle Mischungsbestandteile Lösungsviskositäten in den angegebenen Bereichen aufweisen.

Vorteilhafterweise, insbesondere im Hinblick auf eine gute Verarbeitbarkeit, haben die erfindungsgemässen Formmassen eine Schmelzviskosität (MVR, melt volume-flow rate), bestimmt nach ISO 1133 (2011) bei 275°C und mit einer Auflage von 5 kg, im Bereich von 3 - 120 cm³/10min, insbesondere im Bereich 5 - 100 cm³/10min, ganz besonders bevorzugt im Bereich von 10 - 60 cm³/10min.

Die Polyamid-Formmasse ist gemäss einer bevorzugten Ausführungsform dadurch gekennzeichnet, dass der Anteil der Komponente (A) im Bereich von 48 - 84 Gew.-%, vorzugsweise im Bereich von 53 - 78.9 Gew.-% liegt, jeweils bezogen auf die Summe der Gewichtsprozente der Komponenten (A) bis (G).

Somit werden im Rahmen der vorliegenden Erfindung Polyamid-Formmassen bevorzugt, die dadurch gekennzeichnet sind, dass das Polyamid A ausgewählt ist als ein Polyamid mit einem C/N-Verhältnis von mindestens 10, bevorzugt mit einem C/N-Verhältnis von 10 bis 13, oder ausgewählt ist aus der Gruppe bestehend aus PA610, PA612, PA614, PA616, PA1010, PA1012, PA1014, PA1016, PA11, PA12 oder Mischungen davon, oder ausgewählt ist aus der Gruppe bestehend aus PA1010, PA1012, PA11, PA12 und Mischungen davon und/oder eine Lösungsviskosität im Bereich von ηᵣₑₗ = 1.5 - 2.8, vorzugsweise im Bereich von ηᵣₑₗ = 1.6 - 2.3 ist, jeweils gemessen bei 20 °C an einer Lösung von 0.5 g Polymer gelöst in 100 ml m-Kresol gemäss DIN EN ISO 307:2007, aufweist.

**Komponente (B):** Die Flammschutz-Komponente (B) liegt in der Polyamid-Formmasse in einem Anteil von 6-21 Gew.-%, bezogen auf die Summe der Gewichtsprozente der Komponenten (A) bis (G), vor. Es kann sich dabei ausschliesslich um ein Flammschutzmittel bestehend aus Metallphosphinat (B1) handeln (oder eine Mischung derartiger Systeme), es können aber auch bis zu 50 Gew.-% (B2) wenigstens eines Flammschutz-Synergisten und/oder wenigstens eines Stickstoff und Phosphor enthaltenden Flammschutzmittels, das verschieden ist von Komponente (B1), beigemischt sein. Die Prozentangaben sind jeweils bezogen auf 100 Gewichtsprozent der Komponente (B), d.h. die Summe von (B1) und (B2) ergibt immer 100 Gewichtsprozent der Komponente (B).

Die Polyamid-Formmasse ist gemäss einer bevorzugten Ausführungsform dadurch gekennzeichnet, dass der Anteil der Komponente (B) im Bereich von 7-16 Gew.-%, vorzugsweise im Bereich von 8 - 14 Gew.-% liegt, jeweils bezogen auf die Summe der Gewichtsprozente der Komponenten (A) bis (G).

Hinsichtlich der Zusammensetzung von Komponente (B) ist weiterhin bevorzugt, dass die Komponente (B) aufgebaut ist aus 55 - 100 Gew.-% (B1), 0 - 45 Gew.-% (B2), vorzugsweise 60 - 100 Gew.-% (B1), 0 - 40 Gew.-% (B2), insbesondere vorzugsweise 75 - 98 Gew.-% (B1), 2 - 25 Gew.-% (B2), wobei die Summe der Gewichtsanteile von (B1) und (B2) jeweils 100 Gewichtsprozent der Komponente (B) ergibt. In einer weiteren bevorzugten Ausführungsform besteht Komponente (B) ausschliesslich aus der Komponente (B1), so dass die Komponente (B2) nicht in der Formmasse enthalten ist. Vorzugsweise ist das wenigstens eine Metallphosphinat der Komponente (B1) ausgewählt als Phosphinsäuresalz und/oder Diphosphinsäuresalz, wobei es sich vorzugsweise um ein Phosphinsäuresalz der allgemeinen Formel (I) und/oder Formel (II) und/oder deren Polymere handelt 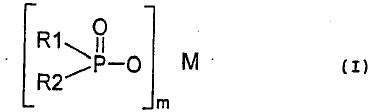 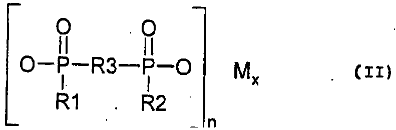 worin
- R1, R2: gleich oder verschieden sind und bevorzugt C1-C8-Alkyl, linear oder verzweigt und/oder Aryl sind;
- R3: C1-C10-Alkylen, linear oder verzweigt, C6-C10-Arylen, -Alkylarylen oder Arylalkylen sind;
- M: ein Metallion aus der 2. oder 3. Haupt- oder Nebengruppe des Periodensystems ist; und
- m: 2 oder 3;
- n: 1 oder 3;
- x: 1 oder 2
bedeuten. Als Metallion M wird bevorzugt Al, Ca und Zn eingesetzt.

Bei Komponente (B2) handelt es sich bevorzugt um Melamin oder Kondensationsprodukte des Melamins, wie z.B. Melem, Melam, Melon, oder um Umsetzungsprodukte von Melamin mit Polyphosphorsäure oder um Umsetzungsprodukte von Kondensationsprodukten des Melamins mit Polyphosphorsäure oder Gemische davon.

Geeignet als Komponente (B2) sind auch Flammschutz-Synergisten wie z.B. Stannate, insbesondere Calciumstannat, Zinkstannat oder Zinkhydroxystannat sowie Borate, wie z.B. Calciumborat oder Zinkborat, sowie Metallocen-Verbindungen, insbesondere Dicyclopentadienyleisen-Verbindungen, wie z.B. Ferrocen, sowie Aluminium- oder Zinksalze der phosphorigen Säure sowie Polyethylenimine.

Bevorzugt werden als Komponente (B2) Melanminpolyphosphat, Zinkstannnat, Zinkborat, Aluminiumphosphit (Aluminiumsalz der phosphorigen Säure), Ferrocen oder Polyethylenimine eingesetzt.

Bei den Metallocenen handelt es sich um Koordinationsverbindungen und zwar um Komplexe, sogenannte Sandwich-Komplexe. Ein Vertreter ist beispielsweise unsubstituiertes oder substituiertes Bis(η⁵-cyclopentadienyl)eisen. Bis(η⁵-cyclopentadienyl)eisen wird auch als Ferrocen bezeichnet.

Unter Polyethyleniminen der Komponente (B2) im Sinne der vorliegenden Erfindung werden Polymere verstanden, in deren Hauptketten NH- oder N-Gruppen vorliegen, die voneinander jeweils durch zwei Methylen-Gruppen getrennt sind und wie sie beispielhaft sie in Encycl. Polym. Sci. Eng. 1, 680-739 beschrieben werden. Im Sinne der Erfindung werden sowohl Homo- als auch Copolymerisate sowie deren Derivate umfasst. Bevorzugt werden verzweigte Polyethylenimine Homopolymere verwendet.

Die Homopolymerisate sind im Allgemeinen durch Polymerisation von Ethylenimin (Aziridin) in wässriger oder organischer Lösung in Gegenwart von säureabspaltenden Verbindungen, Säuren oder Lewis-Säuren erhältlich. Derartige Homopolymerisate sind verzweigte Polymere, die in der Regel primäre, sekundäre und tertiäre Aminogruppen im Verhältnis von ca. 30 % zu 40 % zu 30 % enthalten. Die Verteilung der Aminogruppen, bestimmt mittels ¹³C-NMR Spektroskopie, beträgt vorzugsweise für das Verhältnis von primären zu sekundären zu tertiären Aminogruppen im Bereich von 1:0.7:0.5 bis 1:1,5:1, insbesondere 1:0.8:0.6 bis 1:1.2:0.8.

Als Comonomere werden vorzugsweise Verbindungen eingesetzt, welche mindestens zwei Aminofunktionen aufweisen. Als geeignete Comonomere seien beispielsweise Alkylendiamine mit 2 bis 10 C-Atomen im Alkylenrest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentriamin, Diehexamethylentriamin, Aminopropylethylendiamin und Bisaminopropylethylendiamin. Bevorzugte Polyethylenimine weisen ein gewichtsmittleres Molekulargewicht (Gewichtmittel) Mw von 800 bis 50'000 g/mol, insbesondere bevorzugt von 1'100 bis 25'000 g/mol auf. Das gewichtsmittlere Molekulargewicht Mw wird bestimmt mittels Lichtstreuung gemäss ASTM D4001.

Bevorzugt ist das Polyethylenimin der Komponente (B2) ein verzweigtes Polyethylenimin Homopolymer mit einem Gehalt an primären Amino-Endgruppen im Bereich von 7.000-12.000 µeq/g (mmol/kg).

Als Komponente (B2) wird insbesondere Melaminpolyphosphat bevorzugt. Derartige Flammschutzmittel sind aus dem Stand der Technik bekannt. Hierzu wird auf die DE 103 46 3261 verwiesen, diesbezüglich sei der Offenbarungsgehalt dieser Schrift ausdrücklich hierin eingeschlossen.

Hinsichtlich der Flammschutzmittel ist es besonders bevorzugt, wenn Komponente (B2) und damit die ganze Polyamid-Formmasse kein Melaminpolyphosphat und/oder Melamincyanurat aufweist.

**Komponente (C):** Die Polyamid-Formmasse ist gemäss einer bevorzugten Ausführungsform dadurch gekennzeichnet, dass der Anteil der Komponente (C) im Bereich von 2 - 8 Gew.-%, vorzugsweise im Bereich von 3 - 7 Gew.-%, jeweils bezogen auf die Summe der Gewichtsprozente der Komponenten (A) bis (G), vorliegt. Bei Komponente (C) handelt es sich um Graphit.

Graphit (oder Grafit) ist eine natürlich vorkommende Modifikation des Kohlenstoffs. Seine Atome ordnen sich in dem für Kohlenstoff typischen Hexagonal-Muster in Form eines Sechsecks an und bilden auf diese Weise ein hexagonales Schichtengitter. Die typische graue Farbe erhält Graphit durch seine undurchsichtigen grauen bis schwarzen Kristalle. In jeder Schicht ist jedes Kohlenstoffatom an drei weitere gebunden. Daraus ergibt sich ein zweidimensionales Netzwerk aus Sechsecken. Innerhalb jeder Schicht herrschen starke Bindungen, zwischen den verschiedenen Schichten sind die Bindungen jedoch sehr schwach. So können die Schichten leicht gegeneinander verschoben und sogar getrennt werden. Aus diesem Grund ist Graphit sehr weich und wird daher sogar als Schmiermittel benutzt. Graphit ist elektrisch und thermisch leitfähig und besitzt eine gute chemische Beständigkeit.

Erfindungsgemäss kann natürlicher oder synthetischer Graphit verwendet werden. Graphit kann erfindungsgemäss beispielsweise durch Mahlen zerkleinert werden. Die Partikelgröße liegt vorzugsweise im Bereich von 5 µm bis 300 mm, besonders bevorzugt im Bereich 5 µm bis 25 mm. Nach dem Mahlen liegt die mittlere Partikelgrösse D50 (Median D50) des erfindungsgemäss eingesetzten Graphits bevorzugt im Bereich von 3 bis 30 µm, besonders bevorzugt im Bereich von 5 bis 20 µm. Weiterhin ist bevorzugt, wenn die mittlere Partikelgrösse D90 (Median D90) im Bereich von 10 bis 25 µm liegt. Die spezifische Oberfläche (BET) des erfindungsgemäss verwendeten Graphits beträgt gemäss ASTM D-3037-93 bevorzugt 5 bis 50 m²/g, besonders bevorzugt 10 bis 30 m²/g. Bevorzugt handelt es sich beim erfindungsgemäss verwendeten Graphits nicht um einen Blähgraphit (expandierbarer Graphit), d.h. die Formmasse ist bevorzugt frei an Blähgraphit. Dies deshalb, weil Blähgraphit eine eher geringe Verbesserung des LOI-Wertes bewirkt und gleichzeitig die mechanischen Eigenschaften der Formmasse stärker negativ beeinträchtigt. Blähgraphit wird durch Behandeln von Naturgraphit mit Säure (Schwefelsäure oder Salpetersäure) und Oxidationsmittel (Wasserstoffperoxid, Kaliumpermanganat und Chromsäure) hergestellt. Dadurch werden die Säuren zwischen den Graphitschichten eingelagert. Beim Erhitzen expandiert Blähgraphit auf ein Vielfaches des ursprünglichen Volumens an.

Was die Polyamid-Elastomer **Komponente (D)** angeht, so handelt es sich dabei vorzugsweise um ein Polyamid-Elastomer aufgebaut aus Hartsegmenten auf Basis der Polyamide PA610, PA612, PA614, PA616, PA1010, PA1012, PA1014, PA1016, PA11, PA12, vorzugsweise aus Hartsegmenten der Polyamide PA1010, PA1012, PA11, PA12, insbesondere bevorzugt aus Hartsegmenten aus PA12, und Weichsegmenten auf Basis von, vorzugsweise ausschliesslich, Polyetherdiol, Dimerdiol (auf Basis dimerisierter Fettsäuren mit 20 - 44 C-Atomen) und/oder Polyetherdiamin.

Dieses Polyetherdiol des Weichsegments ist vorzugsweise aufgebaut auf Basis von, vorzugsweise ausschliesslich, wenigstens einem C2 - C5, bevorzugt C2 - C4 Polyoxyalkylen Baustein, insbesondere vorzugsweise ausgewählt aus folgender Gruppe: Ethylenoxid, Propylenoxid, Tetrahydrofuran oder eine Mischung davon.

Die erfindungsgemässen Dimerdiole mit 20 - 44 C-Atomen, bevorzugt mit 24 bis 36 C-Atomen, sind vorzugsweise aliphatische oder cycloaliphatische Diole, hergestellt durch Dimerisierung von ungesättigten Fettsäuren und anschliessender Hydrierung. Besonders bevorzugt wird das C36-Dimerdiol (CAS-Nr. 147853-32-5) und das C44-Dimerdiol. Alternativ oder zusätzlich kann das Polyetherdiamin Weichsegment bevorzugt aufgebaut sein auf Basis von, vorzugsweise ausschliesslich, wenigstens einem C2 - C5, bevorzugt C2 - C4 Polyoxyalkylen Baustein, insbesondere vorzugsweise ausgewählt aus folgender Gruppe: Ethylenoxid, Propylenoxid, Tetrahydrofuran, oder eine Mischung davon. Gemäss einer bevorzugten Ausführungsform verfügen die Polyamid-Hartsegmente über eine zahlenmittlere Molmasse im Bereich von 500 bis 10000 g/mol, bevorzugt auf 700 bis 5000 g/mol und besonders bevorzugt auf 750 bis 3000 g/mol.

Auf der anderen Seite verfügen die Weichsegmente über eine zahlenmittlere Molmasse bevorzugt im Bereich vom 200 - 4000 g/mol, besonders bevorzugt im Bereich vom 200 - 3000 g/mol, insbesondere bevorzugt von 300 - 2500 g/mol.

Gemäss einer bevorzugten Ausführungsform liegt der Anteil Polyamid-Hartsegmente im Bereich von 45 - 95 Gew.-%, vorzugsweise 50 - 80 Gew.-%, und der Anteil Weichsegmente im Bereich von 5 - 55 Gew.-%, vorzugsweise 20 - 50 Gew.-%, jeweils bezogen auf 100 Gew.-% der Komponente (D).

Eine besonders bevorzugte Ausführungsform der Komponente (D) ist dadurch gekennzeichnet, dass sie frei ist von Esterbindungen.

Das Polyamid-Elastomer verfügt gemäss einer weiteren Ausführungsform mindestens über eine amorphe Phase, welche vorzugsweise von der Weichsegment-Einheit, dem Etheranteil, herrührt. Die Glasübergangstemperatur respektive der Glasübergangspunkt dieser amorphen Phase beträgt gemäss einer bevorzugten Ausführungsform höchstens 20°C. Diese amorphe Phase der Polyetheramide verfügt vorzugsweise über einen Glasübergangspunkt von weniger als 0 °C, bevorzugt von weniger als -20 °C. Bevorzugt liegt der Glasübergangspunkt des Weichsegments im Bereich von -70 °C bis 0°C, insbesondere bevorzugt im Bereich von -60 °C bis -20 °C, jeweils bestimmt mittels DSC-Messung gemäss ISO 11357-2.

Die Herstellung der Polyamid-Elastomere erfolgt vorzugsweise in einem ein- oder zweistufigen Polykondensationsverfahren. Im einstufigen Verfahren werden die Polyamid bildenden Komponenten zusammen mit dem Dimerdiol und/oder der Polyether-Komponente in möglichst äquimolarem Verhältnis der Endgruppen der Einzelkomponenten gemischt und bei Temperaturen im Bereich von 180 bis 300 °C bis zum Erreichen der gewünschten Viskosität polykondensiert. Wird ein gezielter blockweiser Aufbau angestrebt kommt mit Vorteil das zweistufige Verfahren zum Einsatz. Hierbei werden in einer ersten Stufe zunächst die mit Carboxy- oder Amino-Endgruppen versehenen Polyamid-Einheiten aus bei Temperaturen von 180 bis 320 °C und bei Drücken von 0 bis 20 bar gebildet, die dann nachfolgend mit den Weichsegment-Einheiten unter Atmosphärendruck oder reduziertem Druck (Vakuum) bei Temperaturen im Bereich von 180 bis 280 °C zum hochmolekularen Copolymeren polykondensiert werden. Werden Weichsegment-Einheiten mit Hydroxyl-Endgruppen eingesetzt, werden mit Vorteil Veresterungskatalysatoren, wie z.B. organische Titanate oder Zirkonate, zur Reaktionsbeschleunigung eingesetzt.

Die erfindungsgemässen Polyamid-Elastomere weisen vorzugsweise einen Zug-E-Modul von höchstens 1000 MPa, bevorzugt von höchstens 700 MPa und besonders bevorzugt von höchstens 600 MPa auf. Damit besitzen die Polyamid-Elastomere bevorzugt Steifigkeiten im Zug-E-Modul-Bereich von 50 bis 700 MPa und besonders bevorzugt im Bereich von 80 bis 600 MPa.

Die Polyamid-Formmasse ist gemäss einer bevorzugten Ausführungsform dadurch gekennzeichnet, dass der Anteil der Komponente (D) im Bereich von 0 - 20 Gew.-%, vorzugsweise im Bereich von 6 - 18 Gew.-% oder 8 - 18 Gew.-% liegt, jeweils bezogen auf die Summe der Gewichtsprozente der Komponenten (A) bis (G).

**Komponente (E):** In der Polyamid-Formmasse gibt es einen Anteil von 0 - 10 Gew.-% Weichmacher, bezogen auf die Summe der Gewichtsprozente der Komponenten (A) bis (G). Der Weichmacher ist dabei verschieden von den anderen Komponenten der Polyamid-Formmasse, insbesondere handelt es sich beim Weichmacher nicht um ein System des Typs (A), (B), (C), (D), (F) und/oder (G). Komponente (E) ist damit ausdrücklich verschieden von Komponente (A), (B), (C), (D), (F) und/oder (G). Gemäss einer bevorzugten Ausführungsform der Formmasse ist der Anteil des Weichmachers der Komponente (E) im Bereich von 0 - 7 Gew.-%, vorzugsweise im Bereich von 1 - 6 Gew.-%, jeweils bezogen auf die Summe der Gewichtsprozente der Komponenten (A) bis (G), vorhanden. Ganz besonders bevorzugt liegt der Anteil von Komponente (E) im Bereich von 1 - 5 Gew.-%, bezogen auf die Summe der Gewichtsprozente der Komponenten (A) bis (G).

Vorzugsweise ist der Weichmacher der Komponente (E) auf Basis eines Amids von Arylsulfonsäuren mit 2 bis 12 C-Atomen, eines Esters der p-Hydroxybenzoesäure mit 2 - 20 C-Atomen in der Alkoholkomponente, eines Phosphonats oder Phosphats aufgebaut. Vorzugsweise können auch Silikonöle als Komponente (E) eingesetzt werden. Vorzugsweise ist der Weichmacher der Komponente (E) ausgewählt aus der Gruppe bestehend aus: Arylsulfonsäureamiden mit 2 bis 12 C-Atomen, p-Hydroxybenzoesäureester mit 2-20 C-Atomen in der Alkoholkomponente, organischen Phosphonaten, organischen Phosphaten, Silikonölen.

Bevorzugte phosphorhaltige Weichmacher sind u.a. Diphenylkresylphosphat, Tris(2-ethylhexyl)phosphat, Diphenyl-2-ethylhexylphosphat, Trikresylphosphat, Alkyl- oder Arylphosphonate, Diethylphosphonat oder zyklische Phosphonate, wie z.B. Aflammit PLF 710.

Bevorzugte Ester der 4-Hydroxybenzoesäure sind p-Hydroxybenzoesäure-octylester p-Hydroxybenzoesäureethylester, p-Hydroxybenzoesäure-i-hexadecylester, p-Hydroxybenzoesäure-2-hexyldecylester.

Bevorzugte Vertreter der Arylsulfonsäureamide sind Benzolsulfonsäureamid, Benzolsulfonsäure-N-alkylamide, wobei die Alkylreste insgesamt 1 bis 20 C-Atome tragen, vorzugsweise Benzolsulfonsäure-N-butylamid, Benzolsulfonsäure-N-octylamid, Benzolsulfonsäure-N-ethylhexylamid, Benzolsulfonsäure-N-cyclohexylamid, Toluolsulfonsäureamid, Toluolsulfonsäure-N-alkylamide, wobei die Alkylgruppen 1 bis 20 C-Atome enthalten, vorzugsweise Toluolsulfonsäure-N-ethylamid und Toluolsulfonsäure-N-butylamid.

Weiterhin handelt es sich beim Weichmacher der Komponente (E) vorzugsweise um Silikonöle, die siloxanbasierte Ketten-Moleküle als Grundstruktur besitzen. Diese zeichnen sich durch die periodisch alternierende Anordnung von Silicium-und Sauerstoffatomen in der Polymerhautkette aus. Im engeren Sinn sollen unter Silikonölen polymerisierte Siloxane mit organischen Seitenketten (Diorganopolysiloxane) mit der allgemeinen Summenformel [R¹R²SiO]ₙ verstanden werden. Ein typischer Vertreter ist beispielsweise Polydimethylsiloxan, wobei die organischen Reste R¹ und R² in obiger Formel Methylgruppen sind. Bevorzugt werden Silikonöle mit einer mittleren Molmasse von 162 bis 150'000 g/mol, bevorzugt von 500 bis 20'000 g/mol. Die kinematische Viskosität gemäss DIN 53019 liegt bevorzugt im Bereich von 0.65 bis 100'000 mm²/s (mPas), besonders bevorzugt im Bereich von 10 bis 1'000 mm²/s (mPas).

Bevorzugtermassen enthält die Komponente (E) wenigstens einen der folgenden Weichmacher, bevorzugtermassen besteht die Komponente aus wenigstens einem der folgenden Weichmacher: Polydimethylsiloxan, p-Hydroxybenzoesäure-octylester, p-Hydroxybenzoesäureethylester, p-Hydroxybenzoesäure-i-hexadecylester, p-Hydroxybenzoesäure-2-hexyldecylester, Benzolsulfonsäureamid, Benzolsulfonsäure-N-alkylamide, wobei die Alkylreste insgesamt 1 bis 20 C-Atome tragen, vorzugsweise Benzolsulfonsäure-N-butylamid, Benzolsulfonsäure-N-octylamid, Benzolsulfonsäure-N-ethylhexylamid, Benzolsulfonsäure-N-(2-hydroxypropyl)amid, Benzolsulfonsäure-N-cyclohexylamid, o-Toluolsulfonsäureamid, p-Toluolsulfonsäureamid o- oder p-Toluolsulfonsäure-N-alkylamide, wobei die Alkylgruppen 1 bis 20 C-Atome enthalten, vorzugsweise o-Toluolsulfonsäure-N-ethylamid, p-Toluolsulfonsäure-N-ethylamid, o-Toluolsulfonsäure-N-butylamid und p-Toluolsulfonsäure-N-butylamid. Die genannten Systeme können einzeln oder in Mischungen eingesetzt werden. Besonders bevorzugt ist eine Mischung aus Benzolsulfonsäure-N-alkylamid und p-Toluolsulfonsäureamid.

Ganz besonders bevorzugt ist die ausschliessliche Verwendung von N-Butylbenzolsulfonamid als Komponente (E).

Vorzugsweise besteht der Weichmacher aus einem Arylsulfonamid, d.h. innerhalb der Komponente (E) gibt es vorzugsweise nur Arylsulfonamid-Systeme als Weichmacher, insbesondere bevorzugt ist N-Butylbenzolsulfonamid.

In einer weiteren bevorzugten Ausführungsform besteht der Weichmacher (E) ausschliesslich aus Silikonölen, insbesondere bevorzugt sind Silikonöle auf Basis von Polydimethylsiloxan. Im Hinblick auf eine Verbesserung des LOI scheinen Silikonöle einen synergistischen Effekt im Zusammenspiel mit Graphit zu bewirken.

**Komponente (F):** In der Polyamid-Formmasse kann optional ein Anteil von bis zu 10 Gew.-%, d.h. 0 - 10 Gew.-%, bezogen auf die Summe der Gewichtsprozente der Komponenten (A) bis (G), Polyolefin vorliegen. Bevorzugt liegt der Anteil der Komponente (F) in der Formmasse im Bereich von 0 - 7 Gew.-%, vorzugsweise im Bereich von 1 - 6 Gew.-%, jeweils bezogen auf die Summe der Gewichtsprozente der Komponenten (A) bis (G). Ganz besonders bevorzugt liegt der Anteil von Komponente (F) im Bereich von 1 - 5 Gew.-%, bezogen auf die Summe der Gewichtsprozente der Komponenten (A) bis (G). Gemäss einer bevorzugten Ausführungsform ist dieses Polyolefin der Komponente (F) auf Basis wenigstens eines oder einer Kombination folgender Bausteine, vorzugsweise als Copolymer, insbesondere vorzugsweise als Terpolymer, aufgebaut: Ethylen, Propylen, Butylen, Acrylat, Methacrylat, Acrylsäure, Methacrylsäure, Maleinsäureanhydrid, Glycidyl-Methacrylat, Dien, insbesondere Butadien und/oder Isopren. Insbesondere bevorzugt ist es als Ethylen-Propylen und Ethylen-Butylen Copolymer aufgebaut, das mit Maleinsäureanhydrid gepfropft ist. Und/oder es ist als Ethylen-Methacrylsäure-Acrylat-Terpolymer aufgebaut, das mit Metallionen neutralisiert ist, insbesondere bevorzugt mit Zinkionen.

Gemäss einer anderen bevorzugten Ausführungsform ist das wenigstens eine Polyolefin der Komponente (F) ausgewählt aus folgender Gruppe: Ethylen-Propylen-Kautschuk (EPM, EPR), Ethylen-Propylen-Dien-Kautschuk (EPDM), Styrol haltiges Elastomer, insbesondere SEBS, SBS, SEPS, Acrylatkautschuk, Nitril-Kautschuke (NBR, H-NBR), Siliconkautschuk.

Gemäss einer weiteren bevorzugten Ausführungsform hinsichtlich Komponente (F) ist das wenigstens eine Polyolefin funktionalisiert, vorzugsweise mit Maleinsäureanhydrid, Acrylsäure und/oder Glycidyl-Methacrylat. Dabei liegt der Pfropfgrad vorzugsweise im Bereich von 0.05 - 10 Gew.-%.

Weiterhin bevorzugt handelt es sich bei Komponente (F) um ein Polyolefin-Ionomer, vorzugsweise ein Polyolefin-Ionomer, bei dem vorhandene Carboxylgruppen teilweise oder ganz durch Metallbasen neutralisiert sind, so dass die Carboxylat-Gruppen Metallionen, vorzugsweise Zink-Ionen, aufweisen. Besonders bevorzugt handelt es sich beim Polyolefin-Ionomer der Komponente (F) um ein ganz oder teilweise neutralisertes Copolymer aus Ethylen und (Meth)acrylsäure, das Zinkionen enthält.

Im Hinblick auf die Komponenten (D), (E) und (F) ist zu beachten, dass in der Formmasse mindestens eine dieser Komponenten vorhanden sein muss und dass die Summe der Gewichtsanteile der Komponenten (D), (E) und (F) 5 bis 30 Gew.-%, bevorzugt 7 bis 26 Gew.-% und besonders bevorzugt 8 bis 24 Gew.-% oder 10 bis 24 Gew.-%, jeweils bezogen auf die Summe der Gewichtsprozente der Komponenten (A) bis (G), beträgt.

**Komponente (G):** Wie oben dargestellt kann die Polyamid-Formmasse im Rahmen von Komponente (G) bis zu 5 Gew.-% Additive, bezogen auf die Summe der Gewichtsprozente der Komponenten (A) bis (G), enthalten. Auch hier ist hervorzuheben, dass die Additive der Komponente (G) verschieden sind von den anderen Komponenten (A) bis (F). Vorzugsweise liegt der Anteil der Komponente (G) in der Formmasse im Bereich von 0 - 2.0 Gew.-%, insbesondere vorzugsweise im Bereich von 0.1 - 2.0 Gew.-%, jeweils bezogen auf die Summe der Gewichtsprozente der Komponenten (A) bis (G). Nach einer bevorzugten Ausführungsform sind die Additive der Komponenten (G) ausgewählt aus der Gruppe bestehend aus Stabilisatoren, Alterungsschutzmittel, Antioxidantien, Antiozonantien, Verarbeitungsstabilisatoren, Verarbeitungshilfsmittel, Viskositätsmodifikator, Lichtschutzmittel, UV-Stabilisatoren, UV-Absorber, anorganische Hitzestabilisatoren, insbesondere auf Basis von Kupferhalogeniden und Alkalihalogeniden, organische Hitzestabilisatoren, optische Aufheller, Kristallisationsbeschleuniger, Kristallisationsverzögerer, Fliesshilfsmittel, Schmiermittel, Gleitmittel, Entformungsmittel, Färbemitteln, insbesondere Farbstoffen, anorganischen Pigmenten, organischen Pigmenten, Russ und Mischungen hiervon.

Eine besonders bevorzugte Ausführungsform der vorgeschlagenen Polyamid-Formmasse ist dadurch gekennzeichnet, dass sie wie folgt zusammengesetzt ist: Polyamid-Formmasse bestehend aus:

| | |
|---|---|
| A | 34 - 88 Gew.-% Polyamid ausgewählt aus der Gruppe bestehend aus PA610, PA612, PA614, PA616, PA1010, PA1012, PA1014, PA1016, PA11, PA12 oder Mischungen davon; |
| B | 6 - 21 Gew.-% Flammschutzmittel, bestehend aus: |
| B1 | 50 - 100 Gew.-% wenigstens eines Metallphosphinats; |
| B2 | 0 - 50 Gew.-% wenigstens eines Flammschutz-Synergisten und/oder wenigstens einem Stickstoff und Phosphor enthaltenden Flammschutzmittels; |
| | wobei die Summe der Komponenten B1 und B2 100 Gew.-% der Komponente B ergibt; |
| C | 1 - 10 Gew.-% Graphit; |
| D | 0 - 25 Gew.-% Polyamid-Elastomer aus PA610, PA612, PA614, PA616, PA1010, PA1012, PA1014, PA1016, PA11 oder PA12 Polyamid-Hartsegmenten und Weichsegmenten auf Basis von, vorzugsweise ausschliesslich, Polyetherdiol aus wenigstens einem Baustein ausgewählt aus folgender Gruppe: Ethylenoxid, Propylenoxid, Tetrahydrofuran; wobei das Polyamid-Elastomer bevorzugt frei von Esterbindungen ist; |
| E | 0 - 10 Gew.-% Weichmacher ausgewählt aus der Gruppe bestehend aus: Arylsulfonsäureamiden mit 2 bis 12 C-Atomen, p-Hydroxybenzoesäureester |
| | mit 2-20 C-Atomen in der Alkoholkomponente, organischen Phosphonaten, organischen Phosphaten, Silikonölen; |
| F | 0 - 10 Gew.-% Polyolefin ausgewählt als Copolymer, aufgebaut aus wenigstens einem oder einer Kombination folgender Bausteine: Ethylen, Propylen, Butylen, Acrylat, Methacrylat, Acrylsäure, Methacrylsäure vorzugsweise funktionalisiert mit Maleinsäureanhydrid und/oder als Polyolefin-Ionomer; |
| G | 0 - 5 Gew.-% Additive, verschieden von A bis F; |

wobei die Summe der Gewichtsanteile der Komponenten D bis F 5 bis 30 Gew.-%, bezogen auf die Summe der Gewichtsprozente der Komponenten A bis G, beträgt und wobei sich die Gewichtsanteile der Komponenten A bis G auf 100 Gew.-% ergänzen.

Eine weitere besonders bevorzugte Ausführungsform der vorgeschlagenen Polyamid-Formmasse ist dadurch gekennzeichnet, dass sie wie folgt zusammengesetzt ist: Polyamid-Formmasse bestehend aus:

| | |
|---|---|
| A | 48 - 84 Gew.-% Polyamid ausgewählt aus der Gruppe bestehend aus PA1010, PA1012, PA11, PA12 oder Mischungen davon; |
| B | 7 - 16 Gew.-% Flammschutzmittel, bestehend aus |
| B1 | 50 - 100 Gew.-% wenigstens eines Metallphosphinats ausgewählt als Phosphinsäuresalz und/oder Diphosphinsäuresalz; |
| B2 | 0 - 50 Gew.-% wenigstens eines Flammschutz-Synergisten und/oder wenigstens einem Stickstoff und Phosphor enthaltenden Flammschutzmittels aus gewählt als Melanminpolyphosphat, Zinkstannat, Zinkborat, Ferrocen und/oder Polyethylenimin; |
| | wobei die Summe der Komponenten B1 und B2 100 Gew.-% der Komponente B ergibt; |
| C | 2 - 8 Gew.-% Graphit; |
| D | 0 - 20 Gew.-% Polyamid-Elastomer aus PA1010, PA1012, PA11 oder PA12 Polyamid-Hartsegmenten und Weichsegmenten auf Basis von, vorzugsweise ausschliesslich, Polyetherdiol aus wenigstens einem Baustein ausgewählt aus folgender Gruppe: Ethylenoxid, Propylenoxid, Tetrahydrofuran; wobei das Polyamid-Elastomer bevorzugt frei von Esterbindungen ist; |
| E | 0 - 7 Gew.-% Weichmacher ausgewählt als N-Butylbenzolsulfonamid und/oder Silikonöl; |
| F | 0 - 7 Gew.-% Polyolefin ausgewählt als Copolymer, aufgebaut aus wenigstens einem oder einer Kombination folgender Bausteine: Ethylen, Propylen, Butylen, Acrylat, Methacrylat, Acrylsäure, Methacrylsäure vorzugsweise funktionalisiert mit Maleinsäureanhydrid und/oder als Polyolefin-Ionomer; |
| G | 0 - 2.0 Gew.-% Additive, verschieden von A bis F; |

wobei die Summe der Gewichtsanteile der Komponenten D bis F 7 bis 26 Gew.-%, bezogen auf die Summe der Gewichtsprozente der Komponenten A bis G, beträgt und sich die Gewichtsanteile der Komponenten A bis G auf 100 Gew.-% ergänzen. Bevorzugt sind Polyamid-Formmassen, die dadurch gekennzeichnet sind, dass sie
- eine Bruchdehnung bestimmt nach ISO 527:2012 von mindestens 100%, besonders bevorzugt von mindestens 120% aufweisen;
- und/oder einen Zug-E-Modul bestimmt nach ISO 527:2012 im Bereich von 500 bis 1500 MPa aufweisen;
- und/oder eine Kerbschlagzähigkeit bei -45 °C bestimmt nach ISO 179-1 (2023) bzw. ISO 179-2 (2020) von mindestens 4 kJ/m² aufweisen;
- und/oder einen LOI (Limiting Oxygen Index) bestimmt nach DIN EN ISO 4589-2:2017 von mehr als 32%, besonders bevorzugt von mindestens 34% und insbesondere bevorzugt von mindestens 36% aufweisen.

Weiterhin betrifft die vorliegende Erfindung ein Verfahren zur Herstellung einer Polyamid-Formmasse, wie sie oben dargestellt wurde, welches Verfahren vorzugsweise dadurch gekennzeichnet ist, dass die Komponenten (A), (C), (D), (F) und (G) separat zu den Komponenten aus (B) vorgemischt werden und getrennt in den Einzug eines Compounders zudosiert werden. Alternativ kann (B) auch über einen Sidefeeder in die Schmelze von (A), (D) und (F) dosiert werden. Komponente (E) wird allenfalls ebenfalls separat vorgemischt oder flüssig in die aufgeschmolzene Masse der übrigen Komponenten gepumpt. Die Komponenten (F) und (G) können wahlweise (A) oder (B) zugemischt werden, wobei (A) bevorzugt ist. Bevorzugt wird die Schmelze unter Atmosphärendruck oder Vakuum entgast, um kompakteres Granulat zu erhalten.

Weiter betrifft die vorliegende Erfindung ein Granulat, Pulver oder Bauteile aus einer Polyamid-Formmasse, wie sie oben dargestellt wurde.

Insbesondere betrifft die vorliegende Erfindung flexible Bauteile, insbesondere für brandgeschützte Anwendungen im Bahnbereich, vorzugsweise als Beschichtung, Abdeckung, Folie, Profil, Rohr, Wellrohr, Hohlkörper, Dichtung, Verkleidung, Halterung, Gehäuse, Ummantelung, Elektro- und Elektronikbauteile wie vorzugsweise Stecker und Lüfter, vorzugsweise zugelassen nach DIN EN 45545.

Die Bauteile verfügen vorzugsweise über einen Zug-E-Modul im Bereich von 500 bis 1500 MPa und/oder über eine Bruchdehnung von grösser 100% und/oder eine Kerbschlagzähigkeit von grösser oder gleich 4 kJ/m² bei einer Temperatur von -45 °C. Zudem betrifft die vorliegende Erfindung ein Verfahren zur Herstellung eines solchen Gegenstandes. Es ist vorzugsweise dadurch gekennzeichnet, dass eine Polyamid-Formmasse, wie sie oben beschrieben wird, in einem Extrusions- oder Extrusionsblasverfahren, einem Spritzgussverfahren oder einem Hinterspritzen zum Gegenstand geformt wird.

Zu guter Letzt betrifft die vorliegende Erfindung die Verwendung einer Polyamid-Formmasse, wie sie oben dargestellt wurde, zur Herstellung von solchen Bauteilen. Weitere Ausführungsformen sind in den abhängigen Ansprüchen angegeben.

### BESCHREIBUNG BEVORZUGTER AUSFÜHRUNGSFORMEN

Bevorzugte Ausführungsformen der Erfindung werden im Folgenden anhand der Ausführungsbeispiele beschrieben, die lediglich zur Erläuterung dienen und nicht einschränkend auszulegen sind.

### Herstellung der Polyamid-Formmassen:

Die Komponente des Typs (A) wurde mit der Komponente (D), der Komponente (B), der Komponenten (C), der Komponente (F), und den Additiven der Komponente (G) in den in den folgenden Tabellen angegebenen Proportionen nach folgendem Verfahren compoundiert:
Die Rohstoffe der Komponenten (A), (C), (D), (F) und (G) wurden vorgemischt und gravimetrisch über eine Bandwaage in den Einzug eines Zweiwellenextruders der Fa.

Werner u. Pfleiderer, Typ ZSK 25 dosiert. Komponente (B) wurde separat über eine Schneckenförderung gravimetrisch in den Einzug dosiert. Alternativ kann Komponente (B) ebenfalls mit den Komponenten (A), (C), (D), (F) und (G) vorgemischt oder separat über eine Schneckenförderung gravimetrisch ebenfalls in den Einzug dosiert werden. Der Weichmacher (E) wurde über eine Pumpe 5 Zonen vor der Düse eindosiert. Alternativ kann der Weichmacher auch mit Komponente (A) in einem Extruder vorgemischt werden.

Der Durchsatz der Pumpe wurde vorab ausgelitert, hochviskose Weichmacher können durch eine beheizbare Pumpe bei erhöhter Temperatur leichter verarbeitet werden. 2 Zonen vor der Düse wurde die Schmelze bei Atmosphärendruck entgast (geöffnete Entgasungszone). Es wurde bei Zylindertemperaturen von 270 - 290 °C, bei einer Schneckendrehzahl von 200 U/min und einem Durchsatz von 15 kg/h gearbeitet. Der Compound wurde über eine Düse ausgetragen und nach Abkühlen des Strangs granuliert. Anschliessend wurde bei 80 °C 24 h im Vakuum getrocknet.

### Herstellung der Formkörper:

Die Herstellung der Formkörper erfolgte auf einer Spritzgussmaschine Arburg Allrounder 320-210-750 mit ansteigendem Zylindertemperaturprofil 240 - 260 °C und Einspritzdrücken von 1200 - 1800 bar. Die Formtemperatur betrug 40 °C. Die Geometrie der Formkörper entspricht den Vorgaben der entsprechenden Prüfnormen.

Die Zusammensetzungen der Formmassen und die Eigenschaften der daraus hergestellten Formkörper sind in Tabelle 1 zusammengefasst.

Folgende Materialien wurden eingesetzt:

| | |
|---|---|
| PA12: | Polyamid PA12, Lösungsviskosität ηᵣₑₗ = 1.9, Schmelzpunkt von 178°C, EMS-CHEMIE AG |
| Graphit: | Timrex KS15, synthetischer Graphit, Teilchengrösse: 8 µm (D50), 17 µm (D90), spezifische Oberfläche (BET): 20 m²/g, Imerys Graphite & Carbon Ltd. |
| PA-Elastomer: | Grilflex ELG 3630, Polyetheramid mit PA12-Hartsegmenten und Weichsegmenten auf Basis von Tetrahydrofuran, Lösungsviskosität ηᵣₑₗ = 1.7, Schmelzpunkt Tm = 155°C, EMS-CHEMIE AG |
| BBSA: | N-Butylbenzolsulfonamid |
| AK100 | Silikonöl, Polydimethylsiloxan mit Viskosität von 100 mm²/s, Wacker |
| AK5000 | Silikonöl, Polydimethylsiloxan mit Viskosität von 5000 mm²/s, Wacker |
| FR: | Exolit OP1230, Flammschutzmittel, Phosphororganisches Salz, Aluminiumphosphinat, Clariant Int. AG |
| Polyolefin: | Surlyn 9320, Ethylen-Methacrylsäure-Acrylat-Terpolymer, teilweise neutralisiert mit Zinkionen, DuPont |
| Stabilisator: | Mischung aus Kupferiodid und Kaliumiodid (Gew.-Verhältnis: 1:5) |
| Russ: | Euthylenschwarz 00-6005C4, PE-Masterbatch mit 40 Gew.-% Russ, BASF |
| Lupasol: | Lupasol G20 WFR, Polyethylenimin, BASF |
| Plutocen: | Plutocen F-C, Ferrocen, Innospec |

**Tabelle 1: Beispiele B1 - B5 nach der Erfindung**

| | | **B1** | **B2** | **B3** | **B4** | **B5** |
|---|---|---|---|---|---|---|
| PA12 (Komponente A) | Gew.-% | 65.16 | 60.06 | 61.96 | 63.16 | 62.66 |
| FR (Komponente B1) | Gew.-% | 11.0 | 11.0 | 11.0 | 11.0 | 11.0 |
| Graphit (Komponente C) | Gew.-% | 5.0 | 5.0 | 5.0 | 3.5 | 5.0 |
| PA-Elastomer (Komponente D) | Gew.-% | 10.0 | 17.6 | 15.7 | 16.0 | 18.5 |
| AK100 (Komponente E) | Gew.-% | | | 2.0 | 2.0 | |
| AK5000 (Komponente E) | Gew.-% | | 2.0 | | | 2.0 |
| BBSA (Komponente E) | Gew.-% | 4.5 | | | | |
| Polyolefin (Komponente F) | Gew.-% | 3.5 | 3.5 | 3.5 | 3.5 | |
| Stabilisator (Komponente G) | Gew.-% | 0.24 | 0.24 | 0.24 | 0.24 | 0.24 |
| Russ (Komponente G) | Gew.-% | 0.6 | 0.6 | 0.6 | 0.6 | 0.6 |

| Eigenschaften | | | | | | |
|---|---|---|---|---|---|---|
| E-Modul | MPa | 820 | 1270 | 1370 | 1240 | 1420 |
| Bruchspannung | MPa | 36.9 | 35.8 | 38.8 | 37.8 | 33.2 |
| Bruchdehnung | % | 206 | 171 | 170 | 170 | 120 |
| Kerbschlag 23°C | kJ/m² | 7.4 | 10.1 | 9.7 | 11.8 | 11.3 |
| Kerbschlag -45°C | kJ/m² | 4.1 | 4.2 | 4.4 | 4.7 | 4.5 |
| LOI | % | 40 | 45 | 44 | 42 | 44 |
| MVR (275°C/5kg) | cm³/ 10min | 33.9 | 19.8 | 18.0 | 20.5 | 33.8 |

| | | | | | | |
|---|---|---|---|---|---|---|
| *Kerbschlag = Kerbschlagzähigkeit* | | | | | | |

Gegenüber den Vergleichsbeispielen VB1 und VB2 zeigen die erfindungsgemässen Beispiele B1 bis B5 einen deutlich höheren LOl, der bei mindestens 40% liegt. Der Zusatz an Graphit bewirkt eine deutliche Zunahme des LOI-Wertes. So weist die Formmasse aus Beispiel B1 einen LOI von 40% auf, während die Formmasse VB1 nur einen LOI von 30% hat. Trotz der Verwendung von Graphit kann die Kerbschlagzähigkeit bei tiefen Temperaturen, die Bruchspannung und die Bruchdehnung auf dem Niveau der Vergleichsbeispiele gehalten werden.

Wird der Weichmacher N-Butylbenzolsulfonamid durch Polydimethylsiloxan (Silikonöl) ersetzt, steigt der LOI nochmals deutlich an, wie der Vergleich der Beispiel B1 und B2 zeigt. Die Zunahme des LOI-Wertes fällt dabei höher aus, wenn Graphit in der Formmasse enthalten ist. Ein Vergleich von VB1 mit VB2 zeigt, dass der LOI nur um 2% zunimmt, wenn statt N-Butylbenzolsulfonamid Silikonöl eingesetzt wird. Dagegen nimmt der LOI um 5% zu, wenn die Formmasse wie in B1 und B2 Graphit enthält.

**Tabelle 2: Beispiele B6 - B8 nach der Erfindung sowie Vergleichsbeispiele VB1 und VB2**

| | | **VB2** | **VB1** | **B6** | **B7** | **B8** |
|---|---|---|---|---|---|---|
| PA12 (Komponente A) | Gew.-% | 61.96 | 70.16 | 57.66 | 52.96 | 62.16 |
| FR (Komponente B1) | Gew.-% | 11.0 | 11.0 | 11.0 | 11.0 | 11.0 |
| Plutocen (Komponente B2) | | | | | | 0.5 |
| Lupasol (Komponente B2) | Gew.-% | | | 5.0 | 10.0 | |
| Graphit (Komponente C) | Gew.-% | | | 5.0 | 5.0 | 5.0 |
| PA-Elastomer (Komponente D) | Gew.-% | 20.7 | 10.0 | 18.5 | 18.2 | 18.5 |
| AK100 (Komponente E) | Gew.-% | | | | | |
| AK5000 (Komponente E) | Gew.-% | 2.0 | | 2.0 | 2.0 | 2.0 |
| BBSA (Komponente E) | Gew.-% | | 4.5 | | | |
| Polyolefin (Komponente F) | Gew.-% | 3.5 | 3.5 | | | |
| Stabilisator (Komponente G) | Gew.-% | 0.24 | 0.24 | 0.24 | 0.24 | 0.24 |
| Russ (Komponente G) | Gew.-% | 0.6 | 0.6 | 0.6 | 0.6 | 0.6 |

| Eigenschaften | | | | | | |
|---|---|---|---|---|---|---|
| E-Modul | MPa | 1010 | 620 | 1430 | 1270 | 1380 |
| Bruchspannung | MPa | 32.9 | 44.9 | 33.7 | 29.8 | 32.6 |
| Bruchdehnung | % | 161 | 250 | 140 | 170 | 125 |
| Kerbschlag 23°C | kJ/m² | 16.0 | 11.9 | 9.5 | 9.2 | 9.4 |
| Kerbschlag -45°C | kJ/m² | 4.5 | 4.2 | 4.2 | 4.1 | 4.2 |
| LOI | % | 32 | 30 | 46 | 50 | 45 |
| MVR (275°C/5kg) | cm³/ 10min | 14.9 | 27.9 | 55.3 | 97.3 | 38.8 |

| | | | | | | |
|---|---|---|---|---|---|---|
| *Kerbschlag = Kerbschlagzähigkeit* | | | | | | |

Die Messungen wurden, falls nicht anders vermerkt, nach folgenden Normen und an folgenden Prüfkörpern im trockenen Zustand durchgeführt. D.h. die Prüfkörper werden nach dem Spritzguss mindestens 48 h bei Raumtemperatur in trockener Umgebung, über Silicagel, gelagert, bevor sie den Prüfungen zugeführt werden.

Das **thermische Verhalten** (Schmelzpunkt (T_{M}), Schmelzenthalpie (ΔHₘ), Glasumwandlungstemperatur (T_{g})) wurde anhand der ISO-Norm 11357:2013 (11357-2 für die Glasübergangstemperatur, 11357-3 für die Schmelztemperatur und die Schmelzenthalpie) am Granulat bestimmt. Die Differential Scanning Calorimetry (DSC) wurde mit Aufheizrate von 20 °C/min durchgeführt.

Die **relative Viskosität** (ηᵣₑₗ) wurde bestimmt nach DIN EN ISO 307:2007 an Lösungen von 0.5 g Polymer gelöst in 100 ml m-Kresol bei einer Temperatur von 20 °C. Als Probe wird Granulat verwendet.

**Zug-E-Modul, Bruchfestigkeit und Bruchdehnung:** Zug-E-Modul, Bruchfestigkeit und Bruchdehnung wurden nach ISO 527 (2012) mit einer Zuggeschwindigkeit von 1mm/min (Zug-E-Modul) bzw. mit einer Zuggeschwindigkeit von 50 mm/min (Bruchfestigkeit, Bruchdehnung) am ISO-Zugstab, Norm ISO/CD 3167, Typ Al, 170 x 20/10 x 4mm bei Temperatur 23 °C bestimmt.

**Schlagzähigkeit, Kerbschlagzähigkeit** nach Charpy wurden nach ISO 179/1 (2023) bzw. ISO 179/2 (2020) am ISO-Prüfstab, Norm ISO/CD 3167, Typ B1, 80 x 10 x 4 mm bei einer Temperatur von 23 °C und -45 °C gemessen.

Der **Sauerstoffindex (LOI** = Limiting Oxygen Index) ist die minimale Sauerstoffkonzentration eines Sauerstoff-Stickstoff-Gemisches, angegeben in Volumenprozent, bei der die Verbrennung eines vertikal angeordneten Prüfkörpers (ISO-Prüfstab, Norm ISO/CD 3167, Typ B1, 80 x 10 x 4 mm) unter den Prüfbedingungen anhält. Der LOI wird gemäss DIN EN ISO 4589-1 und 4589-2 (2017) bestimmt. Vorgängig zur LOl-Bestimmung werden die Prüfkörper über eine Dauer von 7 Tagen bei einer Temperatur von 23°C und einer relativen Luftfeuchte von 50% konditioniert.

Der **MVR** (Schmelze-Volumenfließrate oder **M**elt **V**olume-flow **R**ate) wird nach ISO 1133 (2012) mittels eines Kapillarrheometers ermittelt, wobei das Material (Granulat) in einem beheizbaren Zylinder bei einer Temperatur von 275 °C aufgeschmolzen und unter einem durch die Auflagelast von 5 kg entstehenden Druck durch eine definierte Düse (Kapillare) gedrückt wird. Ermittelt wird das austretende Volumen der Polymerschmelze als Funktion der Zeit.

## Patentansprüche

1. Polyamid-Formmasse enthaltend, bevorzugt bestehend aus:
| | |
|---|---|
| A | 34 - 88 Gew.-% teilkristallines, aliphatisches Polyamid mit einem C/N-Verhältnis von mindestens 8; |
| B | 6 - 21 Gew.-% Flammschutzmittel, bestehend aus: |
| B1 | 50 - 100 Gew.-% wenigstens eines Metallphosphinats; |
| B2 | 0 - 50 Gew.-% wenigstens eines Flammschutz-Synergisten und/oder wenigstens einem Stickstoff und Phosphor enthaltenden Flammschutzmittels; |
| | wobei die Summe der Komponenten B1 und B2 100 Gew.-% der Komponente B ergibt; |
| C | 1 - 10 Gew.-% Graphit; |
| D | 0 - 25 Gew.-% Polyamid-Elastomer; |
| E | 0 - 10 Gew.-% Weichmacher; |
| F | 0 - 10 Gew.-% Polyolefin; |
| G | 0 - 5 Gew.-% Additive, verschieden von A bis F; |
wobei die Summe der Gewichtsanteile der Komponenten D bis F 5 bis 30 Gew.-%, bezogen auf die Summe der Gewichtsprozente der Komponenten A bis G, beträgt und wobei sich die Gewichtsanteile der Komponenten A bis G auf 100 Gew.-% ergänzen.

2. Polyamid-Formmasse nach Anspruch 1, **dadurch gekennzeichnet, dass** das Polyamid A
ausgewählt ist als ein teilkristallines, aliphatisches Polyamid mit einem C/N-Verhältnis von mindestens 10, bevorzugt mit einem C/N-Verhältnis von 10 bis 13;
oder ausgewählt ist aus der Gruppe bestehend aus PA610, PA612, PA614, PA616, PA1010, PA1012, PA1014, PA1016, PA11, PA12 oder Mischungen davon;
oder ausgewählt ist aus der Gruppe bestehend aus: PA1010, PA1012, PA11, PA12 und Mischungen davon;
und/oder eine Lösungsviskosität im Bereich von ηᵣₑₗ = 1.5 - 2.8, vorzugsweise im Bereich von ηᵣₑₗ = 1.6 - 2.3 ist, jeweils gemessen bei 20 °C an einer Lösung von 0.5 g Polymer gelöst in 100 ml m-Kresol gemäss DIN EN ISO 307:2007, aufweist.

3. Polyamid-Formmasse nach einem der vorhergehenden Ansprüche, **dadurch gekennzeichnet, dass**
der Anteil der Komponente B, bezogen auf die Komponenten A bis G, im Bereich von 7 - 16 Gew.-%, vorzugsweise im Bereich von 8 - 14 Gew.-% liegt;
und/oder dass die Komponente B aufgebaut ist aus 55 - 100 Gew.-% B1, 0 - 45 Gew.-% B2, vorzugsweise 60 - 100 Gew.-% B1, 0 - 40 Gew.-% B2, besonders bevorzugt 75 - 98 Gew.-% B1, 2 - 25 Gew.-% B2, insbesondere bevorzugt 100 Gew.-% B1, 0 Gew.-% B2, wobei die Summe der Gewichtsanteile von B1 und B2 jeweils 100 Gewichtsprozent der Komponente B ergibt.

4. Polyamid-Formmasse nach einem der vorhergehenden Ansprüche, **dadurch gekennzeichnet, dass** das wenigstens eine Metallphosphinat der Komponente B1 ausgewählt ist als Phosphinsäuresalz und/oder Diphosphinsäuresalz, wobei es sich vorzugsweise um ein Phosphinsäuresalz der allgemeinen Formel I und/oder Formel II und/oder deren Polymere handelt 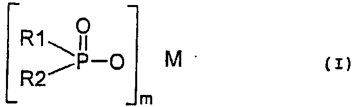 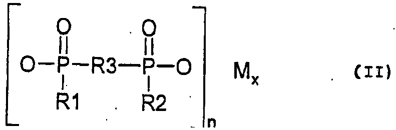 worin
R1, R2 gleich oder verschieden sind und bevorzugt C1-C8-Alkyl, linear oder verzweigt und/oder Aryl sind;
R3 C1-C10-Alkylen, linear oder verzweigt, C6-C10-Arylen, -Alkylarylen oder Arylalkylen sind;
M ein Metallion aus der 2. oder 3. Haupt- oder Nebengruppe des Periodensystems ist; und
m 2 oder 3;
n 1 oder 3;
x 1 oder 2
bedeuten, wobei als Metallion M bevorzugt Al, Ca und Zn eingesetzt ist.

5. Polyamid-Formmasse nach einem der vorhergehenden Ansprüche, **dadurch gekennzeichnet, dass** der Anteil der Komponente C im Bereich von 2 - 8 Gew.-%, vorzugsweise im Bereich von 3 - 7 Gew.-%, jeweils bezogen auf die Summe der Gewichtsprozente der Komponenten A bis G, liegt.

6. Polyamid-Formmasse nach einem der vorhergehenden Ansprüche, **dadurch gekennzeichnet, dass** das Polyamid-Elastomer der Komponente D
Hartsegmente auf Basis von Polyamid PA610, PA612, PA614, PA616, PA1010, PA1012, PA1014, PA1016, PA11, PA12 aufweist, und Weichsegmente auf Basis von, vorzugsweise ausschliesslich,
Polyetherdiol auf Basis von, vorzugsweise ausschliesslich, wenigstens einem Baustein ausgewählt aus folgender Gruppe: Ethylenoxid, Propylenoxid,
Tetrahydrofuran oder eine Mischung davon,
und/oder Dimerdiol, vorzugsweise auf Basis dimerisierter Fettsäuren mit 20 - 44 C-Atomen,
und/oder Polyetherdiamin auf Basis von, vorzugsweise ausschliesslich, wenigstens einem Baustein ausgewählt aus folgender Gruppe: Ethylenoxid, Propylenoxid, Tetrahydrofuran, oder eine Mischung davon;
wobei vorzugsweise die Polyamid-Hartsegmente eine zahlenmittlere Molmasse im Bereich von 500 bis 10000 g/mol, bevorzugt auf 700 bis 5000 g/mol und besonders bevorzugt auf 750 bis 3000 g/mol aufweisen;
und/oder die Weichsegmente eine zahlenmittlere Molmasse im Bereich vom 200 - 4000 g/mol, bevorzugt im Bereich vom 200 - 3000 g/mol, besonders bevorzugt von 300 - 2500 g/mol aufweisen;
und/oder wobei der Anteil Polyamid-Hartsegment 45 - 95 Gew.%, vorzugsweise 50 - 80 Gew.% ausmacht, und der Anteil Weichsegmente im Bereich von 5 - 55 Gew.-%, vorzugsweise 20 - 50 Gew.-%, jeweils bezogen auf 100 Gew.-% der Komponente D;
und/oder dass Komponente D vorzugsweise frei von Esterbindungen ist;
und/oder der Anteil der Komponente D im Bereich von 0 - 20 Gew.-%, vorzugsweise im Bereich von 6 - 18 oder 8 - 18 Gew.-%, jeweils bezogen auf die Summe der Gewichtsprozente der Komponenten A bis G, liegt.

7. Polyamid-Formmasse nach einem der vorhergehenden Ansprüche, **dadurch gekennzeichnet, dass**
der Anteil des Weichmachers der Komponente E im Bereich von 0 - 7 Gew.-%, vorzugsweise im Bereich von 1 - 6 Gew.-% oder 1 - 5 Gew.-%, jeweils bezogen auf die Summe der Gewichtsprozente der Komponenten A bis G, liegt;
und/oder dass der Weichmacher der Komponenten E ausgewählt ist aus der Gruppe bestehend aus: Arylsulfonsäureamiden mit 2 bis 12 C-Atomen, p-Hydroxybenzoesäureester mit 2-20 C-Atomen in der Alkoholkomponente, organischen Phosphonaten oder Phosphaten, Silikonölen.

8. Polyamid-Formmasse nach einem der vorhergehenden Ansprüche, **dadurch gekennzeichnet, dass** Komponente E ein Silikonöl ist.

9. Polyamid-Formmasse nach einem der vorhergehenden Ansprüche, **dadurch gekennzeichnet, dass**
der Anteil der Komponente F im Bereich von 0 - 7 Gew.-%, vorzugsweise im Bereich von 1 - 6 oder 1 - 5 Gew.-% Gew.-%, jeweils bezogen auf die Summe der Gewichtsprozente der Komponenten A bis G, liegt;
und/oder dass das wenigstens eine Polyolefin der Komponente F auf Basis wenigstens eines oder einer Kombination folgender Bausteine, vorzugsweise als Copolymer, insbesondere vorzugsweise als Terpolymer, aufgebaut ist: Ethylen, Propylen, Butylen, Acrylat, Methacrylat, Acrylsäure, Methacrylsäure, Maleinsäureanhydrid, Glycidyl-Methacrylat, Dien, insbesondere Butadien und/oder Isopren;
und/oder dass das wenigstens eine Polyolefin der Komponente F ausgewählt ist aus folgender Gruppe: ein Ethylen-Propylen-Kautschuk, Ethylen-Propylen-Dien-Kautschuk, styrolhaltiges Elastomer, insbesondere SEBS, SBS, SEPS, Acrylatkautschuk, Nitril-Kautschuke, Siliconkautschuk;
und/oder dass das wenigstens eine Polyolefin der Komponente F funktionalisiert ist, vorzugsweise mit Maleinsäureanhydrid, Acrylsäure und/oder Glycidyl-Methacrylat, vorzugsweise mit einem Pfropfgrad im Bereich von 0.05-10 Gew.-%, und/oder dass es sich bei Komponente F um ein Polyolefin-Ionomer handelt, bei dem vorhandene Carboxylgruppen teilweise oder ganz durch Metallbasen neutralisiert sind.

10. Polyamid-Formmasse nach einem der vorhergehenden Ansprüche, **dadurch gekennzeichnet, dass** der Anteil der Komponente G im Bereich von 0 - 2.0 Gew.-%, vorzugsweise im Bereich von 0.1 - 2.0 Gew.-%, jeweils bezogen auf die Summe der Gewichtsprozente der Komponenten A bis G, liegt.

11. Polyamid-Formmasse nach einem der vorhergehenden Ansprüche, **dadurch gekennzeichnet, dass** sie besteht aus:
| | |
|---|---|
| A | 34 - 88 Gew.-% Polyamid ausgewählt aus der Gruppe bestehend aus PA1010, PA1012, PA11, PA12 oder Mischungen davon; |
| B | 6 - 21 Gew.-% Flammschutzmittel, bestehend aus: |
| B1 | 50 - 100 Gew.-% wenigstens eines Metallphosphinats; |
| B2 | 0 - 50 Gew.-% wenigstens eines Flammschutz-Synergisten und/oder wenigstens einem Stickstoff und Phosphor enthaltenden Flammschutzmittels; |
| | wobei die Summe der Komponenten B1 und B2 100 Gew.-% der Komponente B ergibt; |
| C | 1 - 10 Gew.-% Graphit; |
| D | 0 - 25 Gew.-% Polyamid-Elastomer aus PA1010, PA1012, PA11 oder PA12 Polyamid-Hartsegmenten und Weichsegmenten auf Basis von, vorzugsweise ausschliesslich, Polyetherdiol aus wenigstens einem Baustein ausgewählt aus folgender Gruppe: Ethylenoxid, Propylenoxid, Tetrahydrofuran; wobei das Polyamid-Elastomer bevorzugt frei von Esterbindungen ist; |
| E | 0-10 Gew.-% Weichmacher ausgewählt als N-Butylbenzolsulfonamid und/oder Silikonöl; |
| F | 0-10 Gew.-% Polyolefin ausgewählt als Copolymer, aufgebaut aus wenigstens einem oder einer Kombination folgender Bausteine: Ethylen, Propylen, Butylen, Acrylat, Methacrylat, Acrylsäure, Methacrylsäure vorzugsweise funktionalisiert mit Maleinsäureanhydrid und/oder als Polyolefin-Ionomer; |
| G | 0-5 Gew.-% Additive, verschieden von A bis F; |
wobei die Summe der Komponenten D bis F 5 bis 30 Gew.-%, bezogen auf die Summe der Gewichtsprozente der Komponenten A bis G, beträgt und wobei sich die Gewichtsanteile der Komponenten A bis G auf 100 Gew.-% ergänzen.

12. Verfahren zur Herstellung einer Polyamid-Formmasse nach einem der vorhergehenden Ansprüche, **dadurch gekennzeichnet, dass** die Komponente A und gleichzeitig die Komponenten B - G, oder vorzugsweise die Komponenten C, D, F und G, eingemischt werden, wobei die Mischung bevorzugt in einem Temperaturbereich von 240 bis 300 °C, insbesondere im Bereich von 250 bis 290 °C erfolgt und der Weichmacher E entweder über eine Flüssigdosierung separat oder vorgemischt mit Komponente A über eine Granulatdosierung in die Mischung eingebracht wird, und das Flammschutzmittel B bevorzugt über eine separate Pulverdosierung in die bereits als Schmelze vorliegende übrige Mischung eingemischt wird.

13. Bauteil aus einer Polyamid-Formmasse nach einem der vorhergehenden Ansprüche 1 - 11, vorzugsweise hergestellt in einem Verfahren nach Anspruch 12, insbesondere für brandgeschützte Anwendungen im Bahnbereich, vorzugsweise als Beschichtung, Abdeckung, Folie, Profil, Rohr, Wellrohr, Hohlkörper, Dichtung, Verkleidung, Halterung, Gehäuse, Ummantelung, Elektro- und Elektronikbauteile wie vorzugsweise Stecker und Lüfter, vorzugsweise zugelassen nach DIN EN 45545.

14. Verfahren zur Herstellung eines Bauteils nach Anspruch 13, wobei vorzugsweise eine Polyamid-Formmasse nach einem der Ansprüche 1-11 in einem Extrusions- oder Extrusionsblasverfahren, einem Spritzgussverfahren oder einem Hinterspritzen zum Bauteil geformt wird.

15. Verwendung einer Polyamid-Formmasse nach einem der vorhergehenden Ansprüche 1 - 11, vorzugsweise hergestellt in einem Verfahren nach Anspruch 13, zur Herstellung von Bauteilen nach Anspruch 12.
